# EUROPEAN PATENT APPLICATION

(11) **EP 0 615 116 A1**
(43) Date of publication of application: **14.09.1994**
(21) Application number: 94103509.9
(22) Date of filing: 08.03.1994
(51) Int. Cl.: G01K 13/10, G01K 1/02

(54) **Apparatus for measuring temperature of polyurethane foam and method for maturing polyurethane foam**

(30) Priority: 08.03.1993 JP 46738/93
(71) Applicant: BRIDGESTONE CORPORATION, Tokyo 104 (JP); BRIDGESTONE KASEIHIN SEIZO CORPORATION, Nabari-shi, Mie-ken (JP)
(72) Inventor: Komada, Itsumi, Nabari-shi, Mie-ken (JP); Kobayashi, Masahiko, Nabari-shi, Mie-ken (JP); Terasawa, Kazuhiro, Nabari-shi, Mie-ken (JP); Hasegawa, Hajime, Chigasaki-shi, Kanagawa-ken (JP)
(74) Representative: Hansen, Bernd, Dr. Dipl.-Chem.

(57) **Abstract**

An apparatus for measuring the temperature of polyurethane foam comprises a needle-shaped temperature measuring means positioned in the vicinity of a central portion of the polyurethane foam, a transmitter for transmitting an output signal of measured temperature data, a receiver for receiving the output signal, and a recorder for recording the received data. This apparatus can arbitrarily effect the setting of a temperature monitoring room and can measure the temperature of polyurethane foam in highly safe working conditions, simply and efficiently. A method for maturing polyurethane foam is constructed in that: after polyurethane foam is foamed, a temperature measuring sensor having a transmitter is inserted into a vicinity of a central portion of the polyurethane foam; in a maturing room, the polyurethane foam is matured while continuously measuring the temperature of the polyurethane foam; it is determined that a point in time, in which the temperature begins to fall, is the end of the maturing time period; thereafter, the temperature measuring sensor is taken out of the polyurethane foam. This method makes it possible to effect a maturing process of polyurethane foam in highly safe and efficient manner.

## Description

### BACKGROUND OF THE INVENTION

### FIELD OF THE INVENTION

The present invention relates to an apparatus for measuring the temperature of polyurethane foam, which is suitable for use in a process for maturing the polyurethane foam, and a method for maturing the polyurethane foam.

### DESCRIPTION OF THE RELATED ART

Polyurethane foam, particularly soft polyurethane foam, is generally formed by using polyole, polyisocyanate, water and the like as the raw materials so that a foam body is formed by a carbonic acid gas generated during the reaction of these raw materials. The reaction causes a generation of heat. Normally, the heat from the reaction is cooled naturally. However, since certain physical characteristics are required for polyurethane foam, such as hardness, there exist drawbacks in that when the amount of water in the raw materials is excessively increased so that the amount of generated heat increases, the heat from the reaction is accumulated by the effect of heat insulation of the polyurethane foam itself so as to cause discoloration of the polyurethane foam, and according to circumstances, the internal portion of the foam body is decomposed by heat deterioration so that a cavity is formed therein. Further, there is a problem in that the polyurethane foam combusts when air intrudes into the internal portion of the polyurethane foam.

Conventionally, in order to prevent accidents caused by heat deterioration, the amount of generated heat was controlled by strictly controlling the mixture of the compounding ingredients and controlling the amount of supplied raw materials. Further, an abnormal condition caused by the generation of heat was detected when the temperature of a sampling from each production lot was measured. Specifically, for the purpose of controlling the maximum temperature so as to preferably be equal to or less than 180 ° C, the following steps are given: (1) a polyurethane foam modifier such as a flame retardant is added to the polyurethane foam raw materials; (2) the kind of catalyst used is selected; (3) the ratio of water to the raw material polyole is set to be less than or equal to 6.0 parts by weight of water to 100 parts by weight of polyole; and (4) when water exceeding 6.0 parts by weight is mixed in, an inert foaming agent such as freon, methyl chloride, or the like, is added so as to restrain the generation of heat.

In a process for maturing and storing polyurethane foam, measurement of the temperature was effected by an operator inserting a needle-shaped temperature sensor comprised of a thermocouple into a sample of polyurethane foam from each production lot while the lots of polyurethane foam are stored in a maturing room. However, since the length of a compensating lead wire which is connected to the temperature sensor is limited, there existed drawbacks in that the position of a temperature monitoring room which monitors the measured data is limited, and the starting of temperature measurement is limited to after a sample is conveyed into the maturing room. Also, since a large number of compensating lead wires is used, wiring thereof is complex, thereby hindering the securing of positions for producing and storing the polyurethane foam. In addition, that operation cannot be reliably carried out because of compensating lead wires breaking. Further, since the temperature sensor is inserted into and taken out of each sample, which is placed on storage shelves within the storage room, by an operator, the operator must work independently at an elevated position and in a narrow space, which is dangerous work. There also exists an industrial hygiene drawback in which a harmful gas such as from an organic solvent is generated in the maturing room. Thus, the above-described work is undesirable from the viewpoint of safety. Moreover, in the case of polyurethane foam, temperature measurement is required at an internal portion of each product, especially in the vicinity of a central portion thereof. Accordingly, temperature measurement is difficult when a conventional automatic temperature sensor is used from the outside of the product.

### SUMMARY OF THE INVENTION

In view of the aforementioned facts, it is an object of the present invention to provide an apparatus for measuring the temperature of polyurethane foam, in which a temperature monitoring time and a temperature monitoring room can be arbitrarily set and which can measure the temperature under highly safe working conditions, simply and efficiently. It is another object to provide a method for maturing polyurethane foam, which is highly safe and efficient.

The present invention is directed to provide an apparatus for measuring the temperature of polyurethane foam and a method for maturing polyurethane foam. The apparatus for measuring the temperature of polyurethane foam comprises: needle-shaped temperature measuring means to be positioned in a vicinity of a central portion of the polyurethane foam; means for wirelessly transmitting an output signal of measured temperature data measured by the needle-shaped temperature measuring means, the means being connected to the needle-shaped temperature measuring means; means for receiving the output signal of the measured temperature data; and means for recording the received data of the output signal of the measured temperature data.

Further, the method for maturing polyurethane foam comprises the steps of: inserting a temperature measuring sensor, which is provided with means for wirelessly transmitting measured data, into the vicinity of a central portion of the polyurethane foam after the polyurethane foam has foamed; conveying the polyurethane foam into a maturing room so that a maturing process begins; continuously measuring the temperature of the polyurethane foam and detecting the end of a maturing time period by determining a point in time where the temperature begins to fall; thereafter, carrying the matured polyurethane foam out of the maturing room and removing the temperature measuring sensor from the polyurethane foam.

The apparatus for measuring the temperature of polyurethane foam, according to the present invention, having the above-described structure, can arbitrarily set the temperature monitoring time and temperature monitoring room, is highly safe under working conditions, and can simply and efficiently measure the temperature. Further, the method for maturing polyurethane foam, according to the present invention, has an excellent effect in that a plurality of polyurethane foams having different maturing conditions can be matured in high safety and efficiently.

### BRIEF DESCRIPTION OF THE DRAWINGS

Fig. 1 is a block diagram illustrating one aspect of means which wirelessly transmits an output signal of measured temperature data which is used by an apparatus for measuring the temperature of polyurethane foam, according to the present invention.

Fig. 2 is a block diagram illustrating one aspect of means which receives an output signal of measured temperature data which is used by the apparatus for measuring the temperature of polyurethane foam, according to the present invention.

Fig. 3 is a graph which indicates the results obtained by measuring variations in the temperature of polyurethane foam, which is being matured after foaming, by means of the apparatus for measuring the temperature of polyurethane foam, according to the present invention.

### DESCRIPTION OF THE PREFERRED EMBODIMENTS

The present invention will now be described in details.

In the present invention, any means may be used as a temperature measuring means, which is used in an apparatus for measuring the temperature of polyurethane foam, if the means can convert variations in temperature into an electrical output. Such means includes, for example, a thermoelectric temperature sensor, a temperature sensor of a metallic resistance type, a temperature sensor of a semiconductor resistance type (i.e., thermistor), a positive temperature-characteristic thermistor, and the like. Also, in consideration of heat-resisting property, stability, magnitude of electromotive force, and the like, it is preferable that a thermoelectric temperature sensor, particularly a temperature sensor using a K-type thermocouple (comprised of strand elements constructed such that a plus leg is made of nickel chromium and a minus leg is made of nickel aluminum) which is prescribed by JIS C 1602, or a temperature sensor using a J-type thermocouple (comprised of strand elements constructed such that a plus leg is made of nickel chromium and a minus leg is made of nickel copper), is used. The temperature measuring means is formed into the shape of a needle so as to be easily inserted into a vicinity of a central portion of the polyurethane foam. In order to protect the apparatus and to make it easy for the aforementioned means to be inserted into polyurethane foam, the needle-shaped temperature measuring means is preferably inserted into a small tube whose outer surface has been made smooth. The small tube is preferably made of a light, thin metal such as stainless steel. Further, the surface-smoothing process is effected by, for example, finishing the outer surface of the small tube with fluorine-contained resin, or coating the surface with a lubricant, made from oil, a polymer or the like.

The temperature detected by the temperature measuring means is outputted as an electric signal. The electric signal is amplified and corrected as desired, and is then converted from an analog signal to a digital signal and is wirelessly transmitted to a receiving means by a means for wirelessly transmitting an output signal of the measured temperature data. As the means for wirelessly transmitting the output signal of the measured temperature data, a general small-sized transmitter is used. Preferably, the transmitter has an analog-digital converting section, a modulating section, and low transmission power. Also, it is preferable that the transmitter has a bottom face area of at most 25 cm × 25 cm and is light in weight. It is also preferable that the portion of the transmitter which contacts the surface of the polyurethane foam, is provided with, for example, non-slipping means such as needle-shaped projections, corrugation, raised fibers, and the like.

As an output signal receiving means, a common receiver or any receiver which corresponds to the aforementioned transmitting means may be used. When an output signal is modulated and wirelessly transmitted by the transmitting means, a demodulator is required. The received output signal is converted from a digital signal to an analog signal and is transferred to a recording means.

As an instrument for recording the received signal, a common recorder can be used. Preferably, a plurality of recorders which records information from each polyurethane foam is concentratedly managed in a temperature monitoring room (monitor room) which is arbitrarily set.

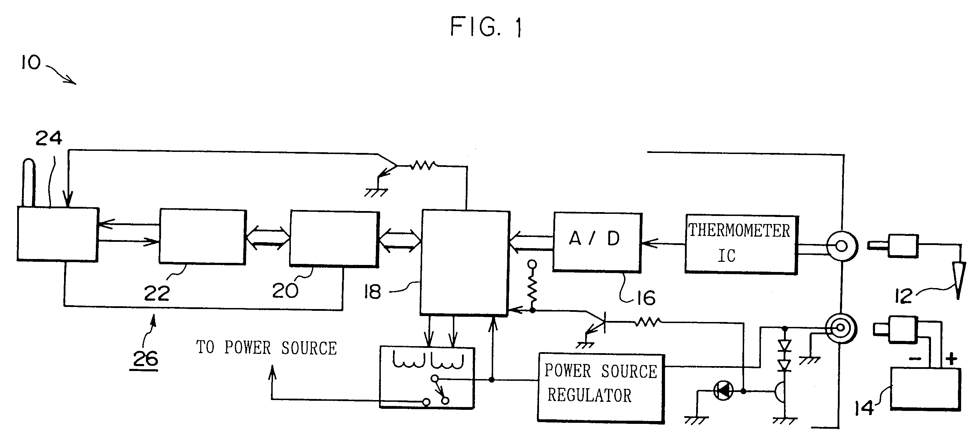

Fig. 1 is a block diagram illustrating one aspect of the means for wirelessly transmitting an output signal of measured temperature data.

A transmitter 10 is connected to a K-type thermocouple 12 and a battery 14. The temperature data measured by the K-typed thermocouple 12 is processed by an analog-digital converting portion 16 and a microcomputer 18. After that, the processed temperature data is modulated into a transmitting signal in a transmitting section 26 having an interface 20, a modulator 22 and a transceiver 24, and is then wirelessly transmitted to a receiver via an antenna of the transceiver 24.

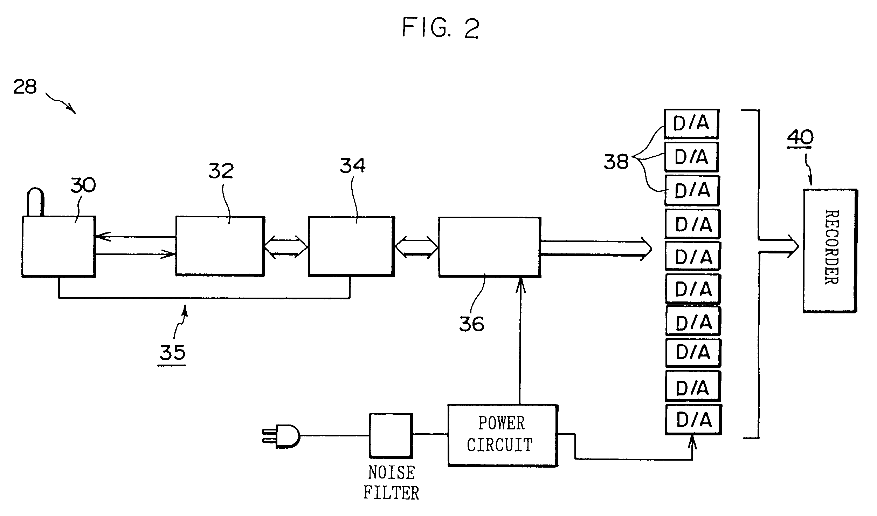

Fig. 2 is a block diagram illustrating one aspect of the means for receiving an output signal of measured temperature data.

A receiver 28 includes a receiving section 35. The receiving section 35 is provided with a transceiver 30 having an antenna for receiving data which is wirelessly transmitted from the transmitter 10, a demodulator 32 for demodulating a signal which is modulated by the modulator 22 of the transmitter 10, and an interface 34. In this receiving section 35, the received signal is demodulated, and subsequently, the signal is processed by a microcomputer 36 and is then transferred to a recording device 40 via digital-analog converters 38.

Next, a process for maturing polyurethane foam, which is described in claim 3 of the present invention, will be described.

As described above, since polyurethane foam is in an unstable state immediately after the foaming process for manufacturing the same, the polyurethane foam is to be passed to a subsequent process after undergoing a maturing process for a predetermined period of time. However, in the conventional system, the maturing of polyurethane foam after foaming was effected by preserving the foamed polyurethane foam in a specified maturing room having storage shelves for a predetermined period of time. The period of time for maturing polyurethane foam is dependent upon various factors such as the blending of the raw materials, the amount of heat generated at the time of reaction, heat-reserving (heat-insulating) properties, the cross-sectional area of polyurethane foam and the like. Thus, since it is complicated to determine the maturing time period by taking into account these factors, in most cases the foamed polyurethane foam was preserved in a maturing room until the day after manufacturing thereof. Thereafter, the polyurethane foam was passed to the subsequent process. Accordingly, the maturing time period becomes excessively long. In addition, there exist various drawbacks in the management of temperature during the maturing time period, as described above. The maturing method according to the present invention is effected in the following manner. After polyurethane foam is manufactured, a temperature measuring sensor, which has means for wirelessly transmitting the measured data, is inserted into the vicinity of a central portion of the manufactured polyurethane foam. The polyurethane foam in this state is conveyed to the maturing room, where the maturing process begins. In an arbitrarily set monitor room or the like, measurement of temperature in the vicinity of the central portion of the polyurethane foam is effected continuously by the recording means which is connected to the means for receiving the measured temperature data from the vicinity of the central portion of the polyurethane foam. Next, after the temperature rises and reaches a peak, the end of the maturing time period is detected by determining the point in time when the temperature begins to fall. The polyurethane foam after the maturing process ends is, if desired, immediately conveyed out of the maturing room, or conveyed out after being preserved still further for a predetermined period of time due to reasons in the subsequent process. Thereafter, the temperature measuring sensor is taken out of the polyurethane foam. The polyurethane foam is then transferred for subsequent processing.

When a rapid increase in temperature occurs during measurement of the temperature, only the polyurethane foam is conveyed out and an appropriate step such as cooling the polyurethane foam can be taken. Therefore, the means for recording the measured temperature data is preferably provided with an alarm warning means which operates when the temperature rises above a fixed value.

According to the present method, since an operator does not need work within the maturing room, the operator is not affected by gas from an organic solvent or the like, which is generated in the maturing room. Further, when an abnormal condition is detected, it suffices that an appropriate treatment is applied to only the polyurethane foam in the abnormal condition. Moreover, the maturing process of a plurality of polyurethane foam having different maturing conditions can be safely and concentratedly managed. In addition, the end of the maturing time period of each polyurethane foam can be simply detected. Accordingly, each polyurethane foam can be efficiently passed to the subsequent process.

By incorporating the present method in factory automation, the preparation of documents, the filing of data, and similar operations which have been conventionally been effected manually, are automated so that working efficiently can be improved.

### First Embodiment

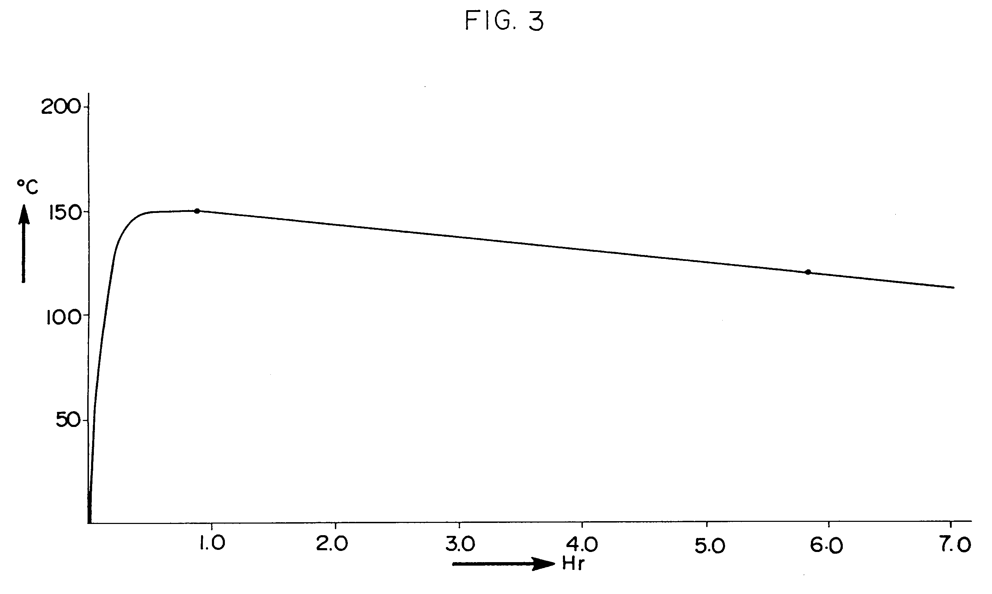

Fig. 3 is a graph illustrating the results obtained by measuring variations in the temperature of polyurethane foam during a maturing process by the apparatus for measuring the temperature of polyurethane foam, according to the present invention.

The polyurethane foam used in this embodiment is formed from the following raw materials: into polyole having an average molecular weight of 4000, 5.0 parts by weight of water and 6.0 parts by weight of methyl chloride, are added. The polyurethane foam manufactured in this way, is 90 cm high and 200 cm wide in a foamed state. The temperature of the foam is measured by the above-described apparatus. Recorder LE 1252NNN, manufactured by CHINO WORKS LTD., is used as the recording device 40.

It is apparent from the graph shown in Fig. 3 that the temperature in the vicinity of the central portion of the polyurethane foam increases immediately after a foaming process begins. When the temperature reaches a peak point in approximately one hour, it begins to fall slowly. As a result, it was detected that the polyurethane foam had reached a stabilized state. The polyurethane foam after the maturing process ends no longer has a cavity formed therein, caused by combustion or heat deterioration. The polyurethane foam can then be passed to the subsequent process in a stabilized state.

## Claims

1. An apparatus for measuring the temperature of polyurethane foam, comprising:
needle-shaped temperature measuring means to be positioned in a vicinity of a central portion of the polyurethane foam;
means for wirelessly transmitting an output signal of measured temperature data measured by said needle-shaped temperature measuring means, said means being connected to said needle-shaped temperature measuring means;
means for receiving the output signal of the measured temperature data; and
means for recording received data of the output signal of the measured temperature data.

2. An apparatus for measuring the temperature of polyurethane foam, according to claim 1, wherein said needle-shaped temperature measuring means is a thermoelectric temperature sensor.

3. An apparatus for measuring the temperature of polyurethane foam, according to claim 1, wherein said needle-shaped temperature measuring means is inserted into a small tube which is processed to have a smooth surface.

4. An apparatus for measuring the temperature of polyurethane foam, according to claim 1, wherein said means for wirelessly transmitting the output signal of the measured temperature data is a transmitter which is provided with an analog-digital converting section and a modulating section.

5. An apparatus for measuring the temperature of polyurethane foam, according to claim 1, wherein said means for receiving the output signal of the measured temperature data is a receiver which is provided with a digital-analog converting section and a demodulating section.

6. An apparatus for measuring the temperature of polyurethane foam, according to claim 1, wherein said means for recording received data of the measured temperature data has an alarm generating device which operates in accordance with an increase in temperature.

7. A method for maturing polyurethane foam, comprising the steps of:
inserting a temperature measuring sensor, which is provided with means for wirelessly transmitting measured data, into a vicinity of a central portion of the polyurethane foam after the polyurethane foam has foamed;
conveying the polyurethane foam, into which the temperature measuring sensor is inserted, to a maturing room where a maturing process is started;
continuously measuring the temperature using the temperature measuring sensor and detecting the end of a maturing time period by determining a point in time in which a variation in the temperature being measured shows a tendency to decrease; and
conveying the polyurethane foam out of the maturing room after the maturing process ends and removing the temperature measuring sensor from the polyurethane foam.

8. A method for maturing polyurethane foam, according to claim 7, wherein said temperature variations being measured are concentratedly determined in a temperature monitoring room.
